# EUROPÄISCHE PATENTSCHRIFT

(11) **EP 0 685 274 B1**
(45) Veröffentlichungstag und Bekanntmachung des Hinweises auf die Patenterteilung: **29.07.1998**
(21) Anmeldenummer: 95107652.0
(22) Anmeldetag: 19.05.1995
(51) Int. Cl.: B21B 15/00, B21B 43/00, B23D 33/02

(54) **Verfahren und Vorrichtung zum Abtrennen und kontrollierten Abkühlen von Einzelstäben aus einem Walzprofil**
Method and device for severing and controlled cooling of single bars from a rolled section
Procédé et dispositif pour le tronçonnage et le refroidissement contrôlé de barres individuelles à partir d'un profilé laminé

(30) Priorität: 31.05.1994 DE 4418917
(43) Veröffentlichungstag der Anmeldung: 06.12.1995
(73) Patentinhaber: SMS SCHLOEMANN-SIEMAG AKTIENGESELLSCHAFT, 40237 Düsseldorf (DE)
(72) Erfinder: Stodt, Rold, D-41564 Kaarst (DE); Drügh, Hans-Peter, D-53909 Zülpich (DE)
(74) Vertreter: Valentin, Ekkehard, Dipl.-Ing.

(56) Entgegenhaltungen:
- EP-A- 0 630 696
- DD-A- 268 178
- DE-C- 282 242
- DE-C- 622 505
- FR-A- 1 370 610
- US-A- 3 220 293
- US-A- 3 897 811

## Beschreibung

Die Erfindung betrifft ein Verfahren und eine Vorrichtung zum Abtrennen und kontrollierten Abkühlen von Einzelstäben aus einem Walzprofil, insbesondere von einem mit Endgeschwindigkeit aus der Walzlinie einer Fertigstraße austretenden walzwarmen Profil aus vorzugsweise hochwertigem Stahl, wobei dieses beim Durchlauf durch eine Teilschere in Schnittlängen unterteilt und jeweils eine Schnittlänge nach dem Abtrennen zu einer Kühleinrichtung geleitet wird.

Ein derartiges Verfahren zum Abtrennen und kontrolliertem Abkühlen wird beispielsweise in einem Firmenprospekt der SMS Schloemann-Siemag AG (W3/3112) "Kontinuierliche Feinstahl- und Drahtstraße" beschrieben, wobei Walzgut und insbesondere Feinstahlprofile durch eine in einer vertikalen Ebene umlaufende Messer aufweisende Rotationsschere und beispielsweise eine mit der Rotationsschere zusammenwirkende Schneidlängenoptimierung in Kühlbettlängen unterteilt werden.

Eine derartige Rotationsschere ist beispielsweise aus der DE-C 282 242 bekannt. Es handelt sich bei dieser bekannten Schere zum Teilen von laufendem Walzgut um zwei an zueinander parallelen Wellen in entgegengesetztem Sinne umlaufenden, sich an der Schnittstelle berührende Messer, bei welcher das zu teilende Walzgut bei jedem Schnitt mittels eines vor der Messerbahn liegenden Führungsrohres durch die Bahn hindurchgeführt wird, wobei das Führungsrohr unter Vermittlung eines Hebelgestänges durch zwei miteinander gekuppelte Kurvenscheiben hin- und herbewegt wird. Über eine Zulaufrinne mit Weiche gelangen die Stäbe dann auf ein Rechenkühlbett. Zum schnellen Abkühlen können unter dem Kühlbett Lüfter angeordnet sein. Nach dem Abkühlvorgang werden die Profile in Stabgruppen gesammelt und durch eine Kaltschere oder Trennschleifmaschine in Handelslängen geteilt. Über einen Quertransport gelangt das Material dann zu einer Stapelanlage.

Das vorgenannte Standard-Kühlverfahren eignet sich für Stähle, die verhältnismäßig rasch, beispielsweise mit Luft, gekühlt werden. Es handelt sich dabei überwiegend um unlegierte Stähle von mittlerer oder geringer Festigkeit. Dagegen sollten hochwertige Stähle wegen ihres speziellen Härtegefüges nicht auf herkömmliche Kühlbetten geleitet werden, weil dort die erforderliche Kontrolle eines für die Endqualität bedeutungsvollen Abkühlprozesses nicht durchführbar ist. Sie müssen mit relativ hohen Temperaturen entweder in Glühkisten oder in einen Glühofen eingesetzt werden. Eine verlängerte Verweilzeit beim Aufteilen in Handelslangen in einer Trennschleifmaschine ist von Nachteil.

Insbesondere Qualitäts- und Edelstähle werden bei der Abkühlung auf dem Kühlbett so hart, daß die Fertigstähle nach dem Schneiden mit der Kaltschere nicht mehr den ^standardsmäßigen Qualitätsforderungen entsprechen. Die Stabenden splittern, es treten Risse auf.

Zur Vermeidung dieser Nachteile wird in der DD-A 268 178 beschrieben, daß unter Ausnutzung der Walzhitze hinter der Kühlbettschere ein Auflauf- und Bremssystem für Langstäbe und ein durch Anschlag begrenzter, mit Treiber und fliegender Warmschneidevorrichtung für Fertiglängen versehener Längsförderer für Stablagen anschließen, und im Bereich zwischen Warmschneidevorrichtung und Anschlag des Längsförderers entweder ein Durchlaufofen für die thermische Behandlung von distanzierten Fertigstablagen oder mehrere Glühöfen bzw. Abkühlkammern für die thermische Behandlung von paketierten Fertigstäben oder mehrere Querfördereinrichtungen für geregelte Abkühlung angeordnet sind.

Insbesondere die notwendige Querförderung langer, noch warmer Profile mit einer separaten, steuerungsmäßig problematischen Trennvorrichtung, wie sie beispielsweise im o.g. Firmenprospekt der SMS Schloemann-Siemag AG dargestellt ist, stellt sich hierbei als Nachteil dar.

Ausgehend von diesem Stand der Technik liegt der Erfindung die Aufgabe zugrunde, ein Verfahren und eine Vorrichtung zum Abtrennen Querfördern und Weitertransport zum kontrollierten Abkühlen von Einzelstäben aus Walzprofilen anzugeben, welche unter Überwindung der vorgenannten Schwierigkeiten und technischen Grenzen neben einem Standard-Kühlverfahren mittels Kühlbett für Stähle mittlerer bzw. geringerer Festigkeit eine zusätzliche Möglichkeit schaffen, speziell hochwertige Stähle entsprechend einer erwünschten Endqualität ihres Gefüges in besonderer Weise separat thermisch zu behandeln und zu vergüten.

Die Lösung dieser Aufgabe gelingt bei einem Verfahren der im Oberbegriff von Anspruch 1 genannten Art mit der Erfindung durch die kennzeichnenden Merkmale des Anspruchs 1 und im wesentlichen dadurch, daß das Walzprofil einer Teilschere zugeführt wird, deren Messer zu beiden Seiten des Profils in einer horizontalen Ebene rotieren und beim Durchtrennen des Profils die dabei entstehenden Profilenden in der horizontalen Ebene gegeneinander seitlich um einen Betrag versetzen.

Mit Vorteil wird durch die Stabförderung am Kühlbett vorbei sowie durch die Art der Schnittausführung das zunächst endlose Profil in Einzelstäbe getrennt und zugleich durch die besondere Arbeitsweise der Messerarme bei ihrer Rotation in einer horizontalen Ebene ein für das Abbremsen auf einer Rutschfläche erforderlicher seitlicher Versatz des abgetrennten Stabes bewirkt, welcher dafür sorgt, daß der neu entstandene Stabkopf den seitlich-versetzt abgetrennten Vorgängerstab ohne Auflaufprobleme überholen kann.

Eine Ausgestaltung der Erfindung sieht vor, daß eine abgetrennte Schnittlänge unter Verwendung von mit der Rotationsschere in der horizontalen Ebene synchron mitrotierenden Rotationsabweisern zugleich mit dem Trennschnitt an mehreren Stellen ihrer Längserstreckung seitlich zur verlängerten Walzlinie versetzt wird. Durch die gleichzeitige Verwendung mehrerer Rotationsabweiser wird vermieden, daß dünne und relativ hochtemperierte Profile beim seitlichen Versatz verbogen werden. Auf diese Weise wird der abgetrennte Stab ohne Deformation seitlich versetzt.

Dabei sieht eine Ausgestaltung des Verfahrens weiter vor, daß eine Schnittlänge als Einzelstab durch den seitlichen Versatz auf eine schräge Abrutsch- und Bremsfläche geleitet wird, auf der das Abbremsen des Stabes erfolgt, während ein neuer Stabkopf das abgeschnittene und seitlich versetzte Ende des Vorgängerstabes problemlos passiert, wogegen die abgetrennten Einzelstäbe nach Abbremsen mittels Querförderung in Glühkisten oder in einen Glühofen eingebracht und darin kontrolliert abgekühlt werden. Dabei kann auch so vorgegangen werden, daß die Einzelstäbe in Handelslängen zerteilt, diese zu Lagen gesammelt und danach die Lagen in Glühkisten oder in einem Ofen kontrolliert abgekühlt werden.

Eine Vorrichtung zum Abtrennen und zum kontrollierten Abkühlen von Einzelstäben aus einem Walzprofil, insbesondere von einem mit Endgeschwindigkeit aus der Walzlinie einer Fertigstraße austretenden walzwarmen Stahlprofil, mit einer Teilschere und einer neben der verlängerten Walzlinie angeordneten Kühleinrichtung, sieht zur Durchführung des Verfahrens vor, daß die Teilschere eine Rotationsschere mit zu beiden Seiten des Walzprofiles in einer horizontalen Ebene gegenläufig-synchron umlaufenden Messerträgern ist, und daß diese, in Drehrichtung gesehen, mit hinter den Messern angeordneten Höckern als Rotationsabweiser ausgebildet sind.

Mit der erfindungsgemäßen Ausbildung der Teilschere als Horizontalschere mit in einer horizontalen Ebene gegenläufig umlaufenden, als Rotationsabweiser ausgebildeten Messerträgern, wird vorteilhaft erreicht, daß gleichzeitig mit dem Trennschnitt die dabei entstehenden Enden des abgetrennten Stabes und des nachfolgenden Profilteils seitlich gegeneinander versetzt werden, wobei der abgetrennte Stab zur Seite versetzt und gebremst und das nachfolgende Profil problemlos an dessen Ende vorbeigefördert wird.

Weitere zweckmäßige Ausgestaltungen der Vorrichtung sind entsprechend den Unteransprüchen vorgesehen.

Die Erfindung wird in schematischen Zeichnungen in einer bevorzugten Ausführungsform gezeigt, wobei aus den Zeichnungen weitere vorteilhafte Einzelheiten der Erfindung entnehmbar sind.

Es zeigen:
- Fig. 1: eine Draufsicht auf die Rotationsschere mit einem Paar nachgeordneter Rotationsabweiser,
- Fig. 2: in Draufsicht eine Folge von Arbeitsphasen einer Rotationsschere,
- Fig. 3: eine Draufsicht auf einen Anlagenteil mit Kühlbett, Auslaufrollgang, nachgeordneter Rotationsschere, Rotationsabweisern und schräger Abrutsch-Bremsfläche,
- Fig. 4: in Draufsicht den Anlagenteil gemäß Fig. 3 mit Kühlbettschere, Kühlbett, Rotationsschere, Abrutsch- und Bremsfläche und nachgeordneter Sammelrinne.

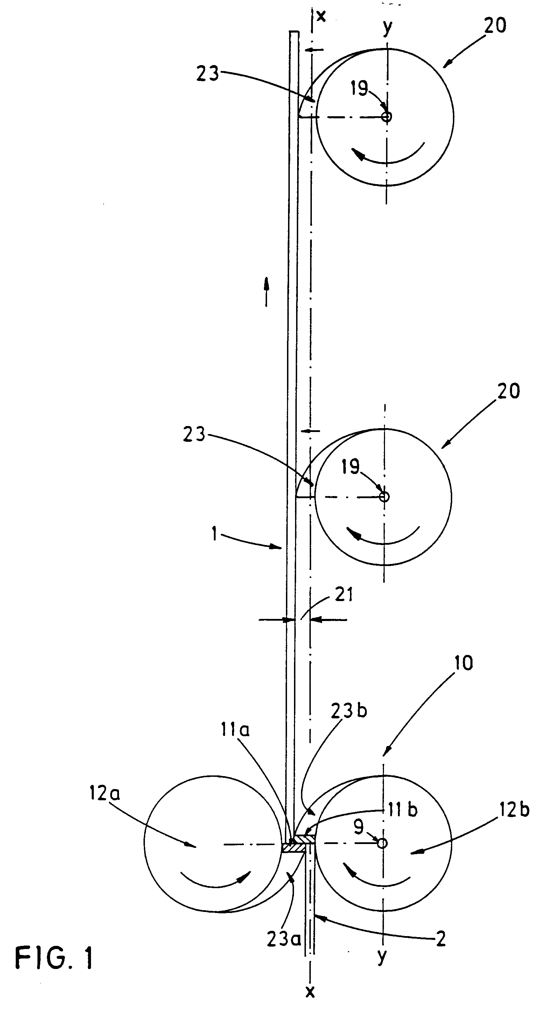

Figur 1 zeigt in der Draufsicht eine als Rotationsschere (10) ausgebildete Teilschere. Diese weist zu beiden Seiten des Walzprofiles (2) in einer annähernd horizontalen Ebene gegenläufig-synchron umlaufende Messerträger (12a, 12b) auf. Die Messerträger sind kreisförmige Elemente, an denen radial vorstehende Messer (11a, 11b) angeordnet sind. Diese stützen sich, in Drehrichtung gesehen, gegen hinter den Messern (11a, 11b) angeordnete Höcker (23a, 23b) ab. Diese Höcker (23a, 23b) dienen zugleich als Rotationsabweiser, welche mit dem Durchtrennen des Profils (2) und Abtrennen eines Einzelstabes (1) Letzteren um ein Abstandsmaß (21) parallel zur verlängerten Walzlinie (x-x) seitlich - im gezeigten Beispiel nach links - versetzen. Dadurch wird dem Nachfolgestab (2) die Möglichkeit gegeben, unter Beibehaltung seiner Geschwindigkeit am abgetrennten Stab (1) vorbei in der verlängerten Walzlinie (x-x) weitergefördert zu werden.

Der Rotationsschere (10) sind mehrere, beispielsweise zwei in gleichen Abständen über die Längenerstreckung des Einzelstabes (1) verteilt angeordnete, ebenfalls mit Höckern (23) ausgebildete, in der horizontalen Ebene synchron zur Rotationsschere (10) mitrotierende Rotationsabweiser (20) nachgeordnet. Der Synchronlauf wird z. B. dadurch erreicht, daß die Antriebe der Rotationsabweiser (20) und der Rotationsschere (10) synchron gekoppelt sind. Das Zusammenwirken von Rotationsschere (10) und Rotationsabweisern (20) führt mit Vorteil dazu, daß ein Einzelstab (1) zugleich an mehreren Stellen seitlich versetzt wird, ohne daß dabei ein z. B. relativ dünner Walzstab (1), der noch eine hohe Temperatur besitzt, beim Seitenversatz in seiner Länge deformiert wird.

Fig. 1 zeigt die Rotationsschere (10) unmittelbar im Zeitpunkt der Zertrennung des Profiles (2) und Abtrennung des Einzelstabes (1) vom Endlosprofil (2) sowie dessen Versatz parallel zur Walzlinie (x-x). Hierfür sind jeweils mehrere Rotationsabweiser (20) vorgesehen, wobei die Rotationszentren (9, 19) von Rotationsschere (10) und Rotationsabweisern (20) auf einer zur verlängerten Walzlinie (x-x) parallelen Linie (y-y) angeordnet sind. Die Rotationszentren der Rotationsabweiser (20) können bei verändertem Durchmesser auch auf einer parallel verschobenen Mittellinie (y-y) liegen.

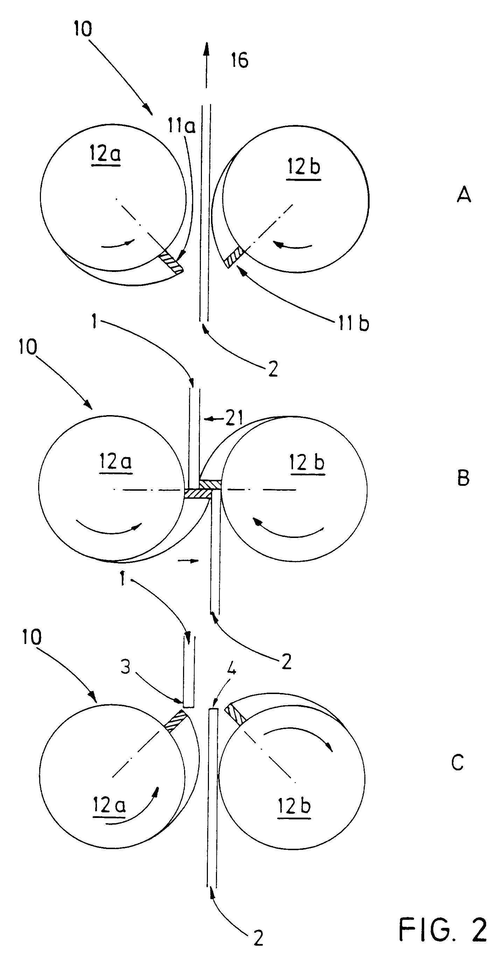

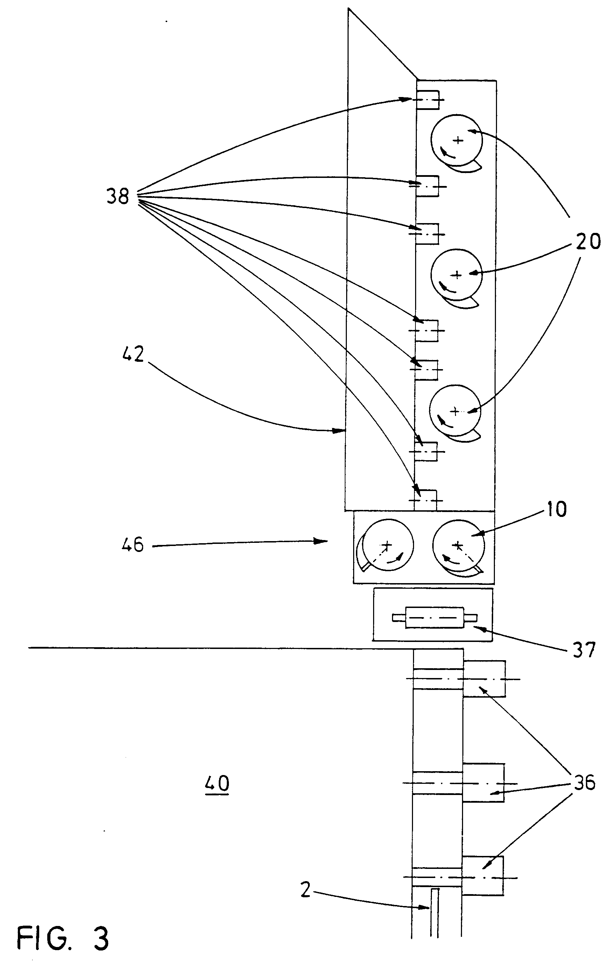

Figur 2 zeigt eine Folge von Arbeitsphasen A, B, C einer Rotationsschere (10) beim Durchtrennen des Profils (2) mit gleichzeitigem seitlichem Versatz (21) eines dabei entstehenden Einzelstabes (1). In der Arbeitsphase A durchläuft zunächst das Profil (2) mit Walzgeschwindigkeit die mit gleicher Umfangsgeschwindigkeit ihrer zylinderförmigen Messerträger (12a, 12b) in einer horizontalen Ebene umlaufende Rotationsschere (10). Noch sind die Messer (11a, 11b) nicht in Schneidposition. Diese Position wird in der Arbeitsphase B erreicht, wobei gezeigt ist, daß zugleich mit dem Schnitt der abgetrennte Einzelstab (1) entsprechend dem Pfeil (21) einen Seitenversatz erhält. Dies wird dadurch erreicht, daß die Messerträger (12a, 12b) der Rotationsschere (10), die in einer horizontalen Ebene zu beiden Seiten des zu teilenden Profils (2) umlaufen, mit Höckern (23a, 23b) als Rotationsabweiser wirkend ausgebildet sind (vgl. Fig. 1). Arbeitsphase C zeigt den Zustand am Ende des Trennvorgangs mit den dabei entstehenden Stabenden (3, 4), wobei der abgetrennte Einzelstab (1) nunmehr nach links in Richtung des Pfeiles (21) versetzt auf eine schräge Abrutsch- und Bremsfläche (siehe Fig. 3, Ziffer 42) abgeschoben wird, während der Nachfolgestab (2) ungehindert mit Walzgeschwindigkeit am abgetrennten Stab (1) vorbei in Richtung des Pfeiles (16) mit Hilfe einer Rollbahn (siehe Fig. 3, Ziffer 38) weiter gefördert wird.

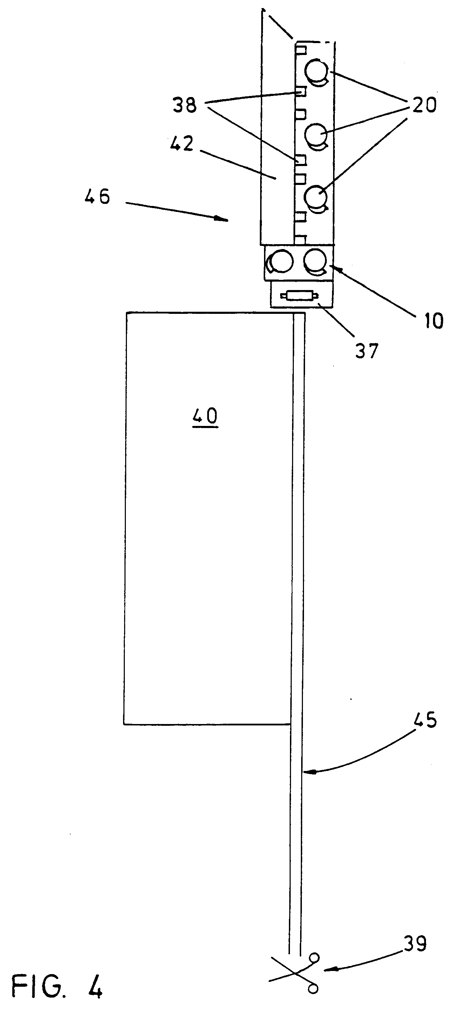

Figur 3 zeigt einen einer Walzstraße nachgeordneten Anlagenteil (46) mit antreibbaren Transportrollen (36), einem fallweise nachgeordneten Treiber (37), einer Rotationsschere (10) mit in einer Reihe nachgeordneter, vorzugsweise antreibbare Transportrollen (38) und seitlich neben diesen, ebenfalls in Reihe angeordnet, mehrere Rotationsabweiser (20) und daneben eine Abrutsch-Bremsfläche (42). Im Anlagenteil (46) wird das aus der Walzstraße ausgeförderte Profil (2) entweder mit Walzgeschwindigkeit oder, nach Abtrennen durch eine Kühlbettschere (siehe Fig. 4, Ziffer 39), mit von den Transportrollen (36) vorgegebener Geschwindigkeit sowie durch den Treiber (37) durch die als Rotationsschere (10) ausgebildete Teilschere gefördert, daraus jeweils ein Einzelstab (1) abgetrennt und mit Hilfe der Rotationsabweiser (20) zur Seite auf die schräge Abrutsch- und Bremsfläche (42) versetzt und von dort durch weitere, dem Fachmann bekannte Quertransporteinrichtungen wie Kettentransporte u. ä. zu weiter nachgeordneten Kühleinrichtungen, beispielsweise Glühkisten oder Glühöfen gefördert.

Figur 4 zeigt in dem einer Walzstraße nachgeordneten Anlagenteil eine Kühlbettschere (39), eine Transportstrecke (45), ein Kühlbett (40) und, entsprechend Fig. 3, den Anlagenteil (46) mit Rotationsschere (10), nachgeordneten Transportrollen (38) sowie Abrutsch- und Bremsfläche (42), der sich eine Sammelrinne anschließen kann. Dabei ist gezeigt, daß mit Hilfe der Transportstrecke (45) die Möglichkeit geschaffen ist, Profile (2), beispielsweise von Hochleistungsstählen, am Kühlbett (40) vorbeizufördern, mit der Rotationsschere (10) in Handelslängen zu zerteilen, auf der Abrutsch-Bremsfläche (42) seitlich quer abzufördern, dabei unter Bremsung zum Stillstand zu bringen, sie sodann zu Lagen zu sammeln und die Lagen anschließend in Glühkisten oder in einen Glühofen zwecks kontrollierter Abkühlung abzutransportieren.

Durch die Verwendung der als Rotationsschere in horizontaler Anordnung ausgebildeten Teilschere (10) im Zusammenwirken mit Rotationsabweisern (20) ist der Anlagenteil (46) in überraschend einfacher und zweckmäßiger Weise für rasch folgende, kurzzeitige Trennvorgänge bei gleichzeitigem Seitenversatz der abgetrennten Stäbe ausgebildet, die danach einem kontrollierten Abkühlungs- und Vergütungsprozeß zugeführt werden können, während andere und insbesondere Stahlsorten mit geringeren Anforderungen an den Kühlprozess auf dem normalen Kühlbett (40) gekühlt werden. Hierfür kann fallweise ebenfalls eine Teilschere mit in einer horizontalen Ebene rotierenden Messern zum Trennen von Walzprofilen in normale Kühlbettlängen Verwendung finden.

## Patentansprüche

1. Verfahren zum Abtrennen und kontrollierten Abkühlen von Einzelstäben (1) aus einem Walzprofil (2), insbesondere von einem mit Endgeschwindigkeit aus der Walzlinie (x-x) einer Fertigstraße austretenden walzwarmen Profil (2) aus vorzugsweise hochwertigem Stahl, wobei dieses beim Durchlauf durch eine Teilschere (10) in Schnittlängen unterteilt und jeweils eine Schnittlänge nach dem Abtrennen zu einer Kühleinrichtung geleitet wird, **dadurch gekennzeichnet**, daß die Rotationsschere (10) bzw. deren Messer (11a, 11b) in einer horizontalen Ebene rotieren und beim Durchtrennen des Walzprofils (2) das dabei entstehende Profilende (3) des erzeugten Einzelstabes (1) seitlich in der horizontalen Ebene gegenüber dem Profilanfang (4) des Nachfolgestabs um einen Betrag (21) versetzen, der so groß ist, daß der Nachfolgestab am Profilende (3) des erzeugten Einzelstabes (1) vorbeigefördert werden kann, wobei eine abgetrennte Schnittlänge (1) unter Verwendung von mit der Rotationsschere (10) in der horizontalen Ebene synchron mitrotierenden Rotationsabweisern (20) zugleich mit dem Trennschnitt an mehreren Stellen der Längsstreckung seitlich zur verlängerten Walzlinie (x-x) versetzt wird.

2. Verfahren nach Anspruch 1, **dadurch gekennzeichnet**, daß eine Schnittlänge als Einzelstab (1) mit seitlichem Versatz (21) auf eine schräge Abrutsch- und Bremsfläche (42) geleitet wird, auf der das Abbremsen des Stabes (1) erfolgt, während ein neuer Stabkopf (4) das abgeschnittene und seitlich versetzte Ende (3) des Vorgängerstabes (1) passiert.

3. Verfahren nach Anspruch 1 oder 2, **dadurch gekennzeichnet**, daß Walzprofile (2) aus hochwertigen Stahlsorten am Kühlbett vorbei einer Teilschere (10) zum Trennen in Einzelstäbe (1) zugeführt und die abgetrennten Einzelstäbe (1) nach Abbremsen in Glühkisten oder in einen Glühofen eingebracht und darin kontrolliert abgekühlt werden, wobei fallweise die Einzelstäbe (1) in Handelslängen zerteilt, zu Lagen gesammelt, und die Lagen in Glühkisten oder Glühofen eingebracht werden.

4. Verfahren nach Anspruch 1, **dadurch gekennzeichnet**, daß Walzprofile (2), vorzugsweise aus weniger hochwertigen Stahlsorten, vor dem Kühlbett (40) in Kühlbettlängen zerteilt, diese auf das Kühlbett (40) gelenkt, abgebremst und auf dem Kühlbett (40) oder auf einem gesonderten Teil des Kühlbettes (40) kontrolliert abgekühlt werden.

5. Vorrichtung zur Durchführung des Verfahrens nach den vorhergehenden Ansprüchen, mit einer Teilschere (10) und einem neben der verlängerten Walzlinie (x-x) angeordneten Kühlbett (40), **gekennzeichnet durch**,
a) mit zu beiden Seiten des Walzprofils (2) in einer horizontalen Ebene gegenläufig-synchron umlaufenden Messerträgern (12a, 12b), an deren Messern (11a, 11b) als Abschiebesegmente ausgebildete Höcker (23a, 23b) angeordnet sind, wobei, in Drehrichtung gesehen, beim linken Messerträger (12a) der Höcker (23a) hinter dem Messer (11a) und beim rechten Messerträger (12b) der Höcker (23b) vor dem Messer (11b) angeordnet ist, wobei
b) der Rotationsschere (10) in Durchlaufrichtung (16) eines Walzprofils (2) gesehen, wenigstens ein, vorzugsweise mehrere, in Abständen über die Längenerstreckung eines Einzelstabes (1) verteilt angeordnete, in einer horizontalen Ebene rotierende Rotationsabweiser (20) nachgeordnet sind, die mit als Abschiebesegmente in gleicher Weise wie der Höcker (23b) des Messerträgers (12) ausgebildete Höcker (23) aufweisen und die mit der Rotationsschere (10) durch Synchronantriebe oder Antriebe für die Erzeugung synchroner Umfangsgeschwindigkeiten zur Rotationsschere (10) so gekoppelt sind, daß die Höcker (23) der Rotationsabweiser (20) mit dem Höcker (23b) der Rotationsschere (10) synchron umlaufen und
c) mit einer schrägen Abrutsch- und Bremsfläche (42), die an der den Rotationsabweisern (20) abgewandten Seite der Walzlinie (x-x) angeordnet ist.

6. Vorrichtung nach Anspruch 5, **dadurch gekennzeichnet**, daß eine Rotationsschere (10) vor dem Kühlbett (40) angeordnet ist.

7. Vorrichtung nach Anspruch 5 oder 6, **dadurch gekennzeichnet**, daß eine Rotationsschere (10) dem Kühlbett (40) nachgeordnet ist.

## Claims

1. Process for the parting and controlled cooling of single rods (1) from a rolled steel section (2), in particular of a roll-warm section (2) made preferably of high-grade steel, emerging at final speed from the pass line (x-x) of a finishing train, whereby it is divided into cut lengths during the flow by parting shears (10) and one cut length respectively is directed after the parting to a cooling device, characterized in that the rotary shears (10) or their blades (11a, 11b) respectively rotate in a horizontal plane and, during the cutting-through of the rolled steel section (2), displace the resulting section end (3) of the produced single rod (1) laterally into the horizontal plane opposite the section start (4) of the subsequent rod by an amount (21) which is so great that the subsequent rod can be transported past the section end (3) of the produced single rod (1), whereby a parted cut length (1) is displaced laterally to the extended pass line (x-x) simultaneously with the parting cut at several points of the linear extension, using rotary deflectors (20) rotating synchronously with the rotary shears (10) in the horizontal plane.

2. Process according to claim 1, characterized in that a cut length is directed as a single rod (1) with lateral offset (21) onto an inclined sliding and braking surface (42) on which the braking of the rod (1) takes place while a new rod head (4) passes the parted and laterally offset end (3) of the preceding rod (1).

3. Process according to claim 1 or 2, characterized in that rolled steel sections (2) made of high-grade types of steel are directed past the cooling bank to parting shears (10) for parting into single rods (1) and the parted single rods (1) after being braked are fed into annealing boxes or into an annealing furnace and undergo controlled cooling there, whereby from case to case the single rods (1) are divided into commercial lengths, collected into packs and the packs are fed into annealing boxes or an annealing furnace.

4. Process according to claim 1, characterized in that rolled steel sections (2), preferably made of less high-grade types of steel, are divided upstream from the cooling bank (40) into cooling-bank lengths, which are directed onto the cooling bank (40), braked and undergo controlled cooling on the cooling bank (40) or on a separate part of the cooling bank (40).

5. Device for implementing the process according to the preceding claims, with parting shears (10) and with a cooling bank (40) located beside the extended pass line (x-x), characterized by
a) blade mounts (12a, 12b) rotating synchronously-opposed on both sides of the rolled steel section (2) in a horizontal plane, on the blades (11a, 11b) of which mounts humps (23a, 23b) formed as deflecting segments are located, whereby, viewed in direction of rotation, the hump (23a) of the left blade mount (12a) is located behind the blade (11a) and the hump (23b) of the right blade mount (12b) in front of the blade (11b), whereby
b) viewed in flow direction (16) of a rolled steel section (2), at least one, preferably several, rotary defectors (20) rotating in a horizontal plane, distributed at intervals over the linear extension of a single rod (1), are located downstream from the rotary shears (10), which defectors have humps (23) shaped as deflecting segments in the same way as the humps (23b) of the blade mount (12) and which defectors are coupled with the rotary shears (10) by synchronized drives or drives for the generation of synchronous peripheral speeds to the rotary shears (10) in such a way that the humps (23) of the rotary defectors (20) rotate synchronously with the hump (23b) of the rotary shears (10) and
c) an inclined sliding and braking surface (42) which is located on the side of the pass line (x-x) turned away from the rotary deflectors (20).

6. Device according to claim 5, characterized in that rotary shears (10) are located upstream from the cooling bank (40).

7. Device according to claim 5 or 6, characterized in that rotary shears (10) are located downstream from the cooling bank (40).

## Revendications

1. Processus de sectionnement et de refroidissement contrôlé des barres individuelles (1) d'un profilé laminé (2), tout particulièrerment d'un profilé (2) laminé à chaud de préférence en acier de grande qualité, sortant à vitesse finale de la ligne de laminage (x-x) d'un train finisseur, sachant que lors du passage il est divisé en longueurs de coupe par une cisaille à tronçonner (10) et qu'après le sectionnement une longueur de coupe est respectivement amenée à un dispositif de refroidissement, caractérisé en ce que la cisaille rotative (10), voire ses lames (11a, 11b), tournent dans une surface horizontale et que lors de la coupe du profilé laminé (2), l'extrémité du profilé (3) de la barre individuelle obtenue (1) en résultant est déplacée dans la surface horizontale d'une certaine valeur (21) par rapport au départ du profilé (4) de la barre suivante, cette valeur étant de telle sorte que la barre suivante puisse être transportée en passant à l'extrémité du profilé (3) de la barre individuelle (1) produite, sachant qu'une longueur de coupe séparée (1) est décalée latéralement par rapport à la ligne de laminage (x-x) allongée en utilisant les déflecteurs de rotation (20) en rotation synchrone avec la cisaille rotative (10) dans la surface horizontale simultanèment avec la coupe de séparation à plusieurs endroits de l'extension longitudinale.

2. Processus selon la revendication 1, caractérisé en ce qu'une longueur de coupe en tant que barre individuelle (1) avec un déport latéral (21) est amenée sur une surface inclinée de glissement et de freinage (42) sur laquelle le freinage de la barre (1) est réalisé, tandis qu'une nouvelle tête de barre (4) dépasse l'extrémité (3) coupée et déportée latéralement de la barre précédente (1).

3. Processus selon la revendication 1 ou 2, caractérisé en ce que les profilés laminés (2) en acier de grande qualité sont amenés au lit refroidisseur en passant devant une cisaille à tronçonner (10) pour couper en barres individuelles (1) et qu'après freinage les barres individuelles sectionnées (1) sont amenées dans des caisses à recuire ou dans un four à recuire où elles sont refroidies sous contrôle, sachant que selon les cas, les barres individuelles (1) sectionnées en longueurs commerciales, sont collectées en couches et que les couches sont amenées dans les caisses à recuire ou dans le four à recuire.

4. Processus selon la revendication 1, caractérisé en ce que les profilés laminés (2) de préférence en acier de moins bonne qualité, sectionnés avant le lit refroidisseur (40) en longueurs correspondant au lit refroidisseur, celles-ci sont dirigées vers le lit refroidisseur (40), sont freinées et refroidies sous contrôle sur le lit refroidisseur (40) ou sur une partie séparée du lit refroidisseur (40).

5. Dispositif pour exécution du processus selon les revendications ci-dessus, avec une cisaille à tronçonner (10) et un lit refroidisseur (40) installé à côté de la ligne de laminage allongée (x -x), caractérisé en ce que,
a) des porte-lames (12a, 12b) synchronisés et tournant en sens inverse sont installés des deux côtés du profilé laminé (2) dans une surface horizontale, sur les lames desquels (11a, 11b) il y a des bosses (23a, 23b) sous forme de segments stripeurs, sachant que, vu dans le sens de rotation, la bosse (23a) est placée derrière la lame (11a) sur le porte-lames gauche (12a) et que sur le porte-lames droit (12b), la bosse (23b) se trouve devant la lame (11b), sachant que
b) vu dans le sens du passage (16) d'un profilé laminé (2) au moins un, de préférence plusieurs déflecteurs rotatoires (20) en rotation sont placés après la cisaille de rotation (10) à distance les uns des autres, dans une surface horizontale sur toute l'extension longitudinale d'une barre individuelle (1), qui présentent des bosses (23) constituées comme la bosse (23b) du porte-lames (12) et qui sont accouplés à la cisaille de rotation (10) par des entraînements synchrones ou entraînements pour la génération des vitesses périphériques synchrones par rapport à la cisaille de rotation(10), de telle sorte que les bosses (23) des déflecteurs de rotation (20) circulent en synchronisation avec la bosse (23b) de la cisaille de rotation (10), et
c) qu' une surface inclinée de glissement et de freinage (42) est disposée sur le côté opposé aux déflecteurs de rotation (20) de la ligne de laminage (x-x).

6. Dispositif selon la revendication 5, caractérisé en ce qu'une cisaille de rotation (10) est disposée devant le lit refroidisseur (40).

7. Dispositif selon la revendication 5 ou 6, caractérisé en ce qu'une cisaille de rotation (10) est intercalée après le lit refroidisseur (40).
